# EUROPEAN PATENT SPECIFICATION

(11) **EP 1 125 443 B1**
(45) Date of publication and mention of the grant of the patent: **22.04.2009**
(21) Application number: 99949036.0
(22) Date of filing: 11.10.1999
(51) Int. Cl.: H04Q 3/00

(54) **METHOD AND SYSTEM FOR FORMING A TELECOMMUNICATION CONNECTION**
VERFAHREN UND SYSTEM ZUM AUFBAU EINER TELEKOMMUNIKATIONSVERBINDUNG
PROCEDE ET SYSTEME DE FORMATION D'UNE CONNEXION DE TELECOMMUNICATIONS

(30) Priority: 09.10.1998 FI 982204
(43) Date of publication of application: 22.08.2001
(73) Proprietor: TeliaSonera Finland Oyj, 00510 Helsinki (FI)
(72) Inventor: HUOPANIEMI, Juho, FIN-02130 Espoo (FI); ALA-LUUKKO, Sami, FIN-00280 Helsinki (FI)
(74) Representative: Simmelvuo, Markku Kalevi
(86) International application number: PCT/FI1999/000844
(87) International publication number: WO 2000/022840

(56) References cited:
- EP-A2- 0 534 673
- WO-A1-96/08909
- WO-A1-97/45792
- WO-A1-98/18269
- GB-A- 2 315 639
- DATABASE WPI Week 199643, Derwent Publications Ltd., London, GB; AN 1996-431067, XP002945187 & JP 8 214 063 A (FUJITSU LTD.) 20 August 1996 & PATENT ABSTRACTS OF JAPAN & JP 08 214 063 A 20 August 1996

## Description

### FIELD OF THE INVENTION

The present invention relates to telecommunication technology. In particular, the object of the invention is to create a new method and system in which the setup of a telecommunication connection is controlled by means of an intelligent network.

### BACKGROUND OF THE INVENTION

'Intelligent network' refers to a network which makes it possible to provide diversified services in the traditional telephone network. The concept of an intelligent network originally arose from a need to develop new telephone services faster and at a lower cost. On the other hand, the aim has also been to develop the controllability and adaptability of services.

Today, telephone operators primarily sell services to their customers. To be successful in the competition, telephone operators must be able to provide personal, individualized and readily manageable services to their customers. These market pressures toward change can be at least partially met by using intelligent networks.

In the future, intelligent network services will be expanded and diversified. Therefore, intelligent networks should be capable of cooperating as traditional telephone networks are at present. The development is advancing toward a situation where one service control point must be able to control as many different services as possible. This means centralized control of the intelligent network.

### STATE OF THE ART

An intelligent network consists of switching, controlling and functional components, i.e. signaling points (SP), and a signaling network connecting these. A service switching point (SSP) is a modified telephone exchange which analyzes the traffic passing through it. Upon detecting a given number that meets a triggering criterion, the service switching point sends a service request to a service control point (SCP). Service switching points are connected via common channel signaling channels to service control points, which implement intelligent network services by utilizing a database. For example, a service control point may perform a number conversion from B-party number to C-party number.

The information required for the control of the service is stored in a database (SDP, Service Data Point), where the service control point can get the information it needs. For instance, if the service includes a recorded message, the service control point may control an intelligent peripheral (IP) implementing the desired recording.

Service switching points are connected via signaling channels to service control points, which implement intelligent network services by utilizing a service database. For example, a service control point may perform a number conversion from B-party number to C-party number by retrieving from the service database the C-party number corresponding to the B-party number.

The communication protocols used in the intelligent network consist of rules observed in the communication between the components of the intelligent network. The protocol defines the interfaces between the components as well as the structure of the messages to be exchanged. The intelligent network components communicate with each other using common channel signaling (CCS). As an ITU-T specification, common channel signaling is known as CCSS No7. In communication between components, the intelligent network utilizes the services of the INAP (INAP, Intelligent Network Application Part) defined by ITU-T. The INAP application part is an intelligent network application protocol used e.g. in the communication between a service control point and a service switching point.

The basic idea of common channel signaling is to transmit speech or data in separate channels and to control the transmission of speech or data using separate signaling channels. The signaling used to control communication in a telecommunication network is transmitted as messages in the form of packets, which are directed from one point to another by using the layers of the CCSS7 network. These layers include e.g. the MTP layer (MTP, Message Transfer Part) and the SCCP layer (SCCP, Service Connection and Control Part), which is an extension of the MTP layer services. In practice, these layers are implemented using applications located in the signaling points. Upon the SCCP layer, it is possible to implement user-specific applications, e.g. software needed for the setup of telecommunication connections.

In the MTP layer, the addresses of network components are formed using a 14-bit code, which is insufficient in a global network. The SCCP layer allows the use of a so-called global title (GT), enabling the transmission of global common channel signaling messages.

Signaling is sent as signaling messages containing information needed by the user parts. A signaling message comprises a signaling information field (SIF), which contains the information needed by the user part, such as data, call control signals, management and maintenance data as well as message type and format.

The signaling message is generated by adding information defined at a higher hierarchy level to the frame structure used by the MTP layer. This is done by forming in the user parts a so-called SCCP message and inserting the SCCP message into the signaling information field of a message signaling unit (MSU).

The signaling information field contains a label which enables the message to be routed through the signaling network to the destination point. The standardized label contains a part called routing label. The routing label consists of an originating point code (OPC) and a destination point code (DPC). Each signaling point in the signaling network has its own unique address. By placing the unique addresses of the components in the OPC and DPC fields, the signaling messages can be directed from one signaling point to another.

In the SCCP layer, Global Title analysis and conversion are performed, whereupon the converted address information is added as a destination point code to the label of the signaling information field. After this, the signaling message is sent to the MTP layer, which takes care of conveying the signaling message to the receiving signaling point on the basis of destination point code. At the destination point, the message is directed from the MTP layer to higher hierarchy levels and further to the desired user part.

A problem with the intelligent network architectures currently used is their decentralized structure, which is inexpedient in certain situations. In prior-art intelligent network architectures, a connection to be set up has to be unnecessarily circulated through various components of the intelligent network, thus needlessly taking up transmission capacity in the network. A further problem is that the management of number-based services (e.g. numbers beginning with 0800 and 020) and traffic is decentralized among different parts of the network instead of being handled in a centralized manner.

The solution to this problem is centralization of functions, which will result in a more flexible intelligent network structure that is also easier to maintain and update. In a centralized intelligent network structure, the intelligence and the switching components of the network are separated from each other, which will make it possible to reduce the prices of the centralizing and switching network components. Moreover, communication in the network is controlled by a centralized network intelligence, allowing more effective utilization of the transmission capacity. In a centralized intelligent network structure, it is essential that the signaling traffic associated with calls can be directed directly to a predetermined service control point. This cannot be accomplished at present. Instead, there are prior-art methods in which queries addressed to a given subscriber can be directed to a certain control point on the basis of the B-party number or MSISDN number (MSISDN, Mobile Subscriber International ISDN Number). Such a method is used in MAP queries (MAP, Mobile Application Part) in the GSM system (GSM, Global System for Mobile communications).

The object of the invention is to eliminate the drawbacks referred to above or at least to significantly alleviate them.

A specific object of the invention is to disclose a new type of method in which the signaling traffic associated with a telecommunication connection is directed from a service switching point to a service control point on the basis of the subscriber number of the A-party.

Prior art includes JP 8214063 A which discloses a load distribution method for intelligent network.

Prior art further includes EP-A2-0534673 which discloses an improved method for secure access control.

Prior art further includes WO 96/08909 A1 which discloses an intelligent network including a set of SCPs which contain individual service profiles which define individual services provided to users of the network as originating users and individual service profiles which define individual services provided to the users as terminating users.

Prior art further includes WO 98/18269 A1 which discloses a telecommunications network with portability of mobile subscriber number.

As for the features characteristic of the invention, reference is made to the claims.

### BRIEF DESCRIPTION OF THE INVENTION

Using the method and system of the invention, a telecommunication connection is set up in a telecommunication network comprising a telecommunication terminal, a telephone exchange and an intelligent network, which again comprises a service switching point, a gateway, a signaling network and one or more service control points. The service control point is connected to the gateway and the gateway is connected to the signaling network. The service control points are also connected to the signaling network.

In the method and system of the invention, the setup and control of the telecommunication connection are managed by means of the intelligent network. This is done by directing the signaling associated with the telecommunication connection to be set up to a given service control point on the basis of the A-party number and/or corresponding information.

In the method of the invention, the A-party calls an intelligent network number. From the telecommunication terminal, a call setup message is transmitted, from which the A-party number or corresponding information is determined. This is done in the same way in which the B-party number is determined in currently known technology. In a preferred embodiment of the invention, the A-party number is determined using an application according to the invention, which can be placed in the telephone exchange, in the gateway or in the service switching point.

After the A-party number has been determined, the gateway is called using the A-party number and/or corresponding information as call address.

In the method of the invention, an SCCP message is generated and the A-party number is placed in the Global Title filed of the SCCP message. The SCCP message and its generation are part of prior-art technology, which is described in literature and appropriate standards. To set the A-party number in the Global Title field, it is possible to use e.g. prior-art techniques applied to set the B-party number or an application according to the invention.

Next, a signaling message is generated. This is done by inserting the SCCP message into a message signaling unit. The destination address of the signaling message is determined by analyzing the Global Title address field and converting the Global Title address into a corresponding destination point code. This is accomplished by applying prior-art techniques or by using an application according to the invention. The correspondence between the Global Title address and the destination point code is determined e.g. using a database and an application according to the invention.

The signaling message is then directed to a predetermined service control point on the basis of the destination point code. This is done using the MTP layer and the signaling network in accordance with known technology. After that, based on the information contained in the signaling message, a connection from the service control point to the service switching point is set up. This is accomplished by means of the user parts and the SCCP layer according to known technology. Finally, the setup and control of the telecommunication connection is carried on by the service switching point in accordance with commands executed by the service control point.

In a preferred embodiment of the invention, the load situation in the telecommunication network is managed by defining the service control points corresponding to A-parties and distributing the A-parties among predetermined service control points on the basis of Global Title analyses performed in the signaling network. This is accomplished e.g. by using a database and an application according to the invention. As the Global Title analysis practically means retrieving the unique address of the service control point corresponding to the Global Title address from the database, the workload on the telecommunication network can be distributed by changing these correspondences.

The invention makes it possible to implement a centralized intelligent network structure. In particular, the method of the invention enables the calls and/or services of a given subscriber to be routed via a predetermined service control point, thus contributing to the implementation of a centralized intelligent network structure. Moreover, the method of the invention can be used for controlling the load situation in a telecommunication network.

### LIST OF ILLUSTRATIONS

In the following, the invention will be described in detail by the aid of some of its embodiments with reference to the drawings, wherein
Fig. 1 presents a system according to the invention; and
Fig. 2 presents a functional block diagram of the method of the invention.

### DETAILED DESCRIPTION OF THE INVENTION

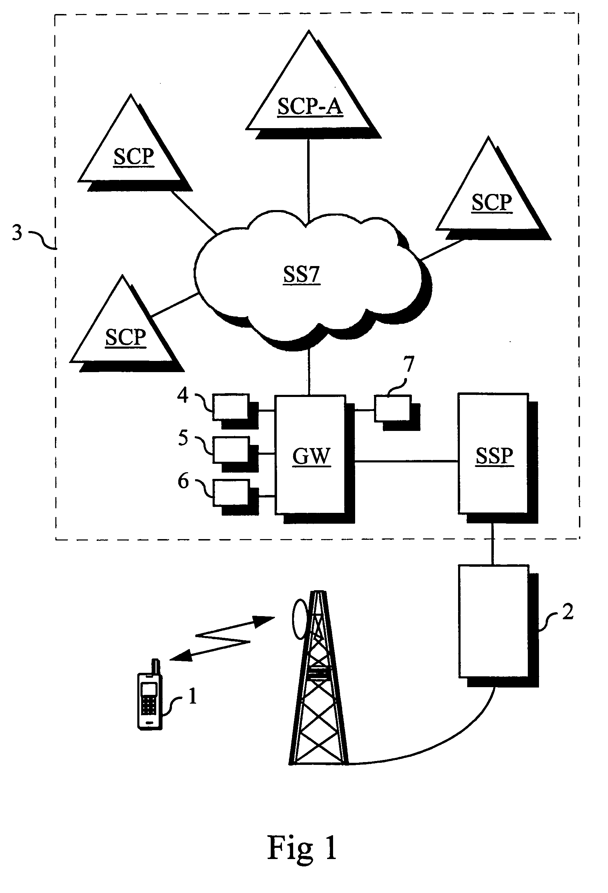

The system illustrated in Fig. 1 comprises a telecommunication terminal (1), a telephone exchange (2) comprising means for the processing of call setup messages, and an intelligent network (3) comprising a service switching point (SSP), a gateway (GW), a signaling network (SS7) and one or more service control points (SCP). The service switching point (SSP) is connected to the gateway (GW) and the gateway is connected to the signaling network (SS7). The service control points (SCP) are also connected to the signaling network (SS7). The gateway (GW) comprises means (4) for inserting the A-party number and/or corresponding information into the Global Title field of the SCCP message and means (5) for the processing of SCCP messages. Moreover, the gateway (GW) comprises means (6) for controlling the load situation in the telecommunication network and means (7) for directing A-parties to predetermined service control points (SCP-A) on the basis of Global Title analyses.

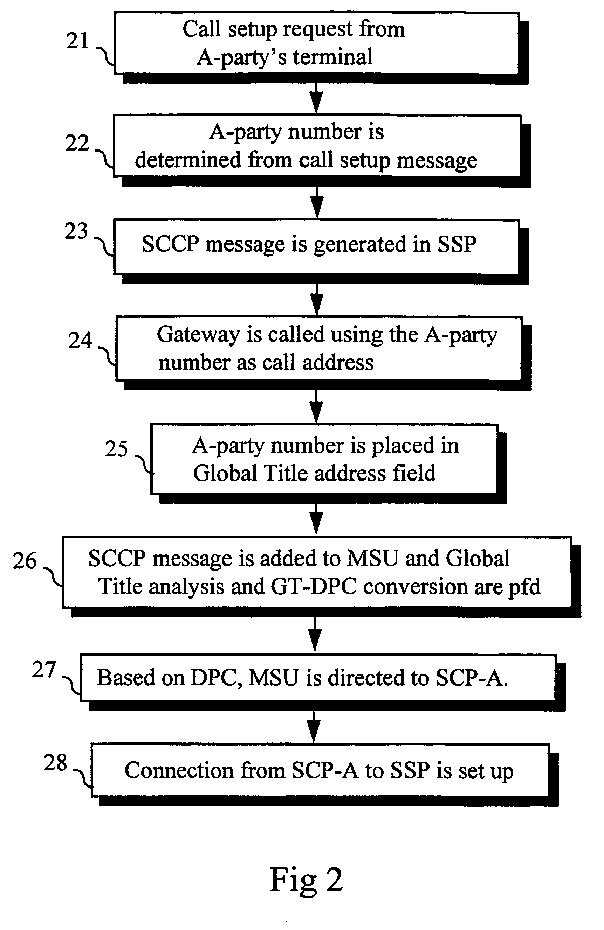

In Fig. 2, block 21, an A-party calls a desired B-party number and a call setup message is sent from the telecommunication terminal (1). In block 22, the A-party number or corresponding information is determined from the call setup message. In block 23, a SCCP message is generated in a service switching point (SSP). In block 24, the gateway (GW) is called using the A-party number or corresponding information as call address. In block 25, the A-party number is inserted into the Global Title address field. In block 26, a signaling message is generated by adding the SCCP message to a message signaling unit, the destination point code of the signaling message is determined by analyzing the Global Title address field and the Global Title address is converted into a corresponding destination point code. In block 27, the signaling message is directed to a predetermined service control point (SCP-A) on the basis of the destination point code. In block 28, based on the signaling message, a connection is set up from the service control point to the service switching point.

The invention is not restricted to the examples of its embodiments described above, but many variations are possible within the scope of the inventive idea defined in the claims

## Claims

1. Method for establishing and controlling a telecommunication connection in a telecommunication network comprising:
a telecommunication terminal (1),
a telephone exchange (2) comprising means for the processing of call setup messages, and
an intelligent network (3) comprising a service switching point (SSP), a gateway (GW), a signaling network (SS7) and one or more service control points (SCP), said service switching point (SSP) being connected to said gateway (GW) and said gateway being connected to the signaling network (SS7) and said service control points (SCP) being connected to said signaling network (SS7), and
in which method the establishment and control of the telecommunication connection is managed by means of the intelligent network by directing the signaling associated with the telecommunication connection to be established to a predetermined service control point (SCP-A), **characterised in that:**
the A-party number and/or corresponding information is determined (22) from the call setup message;
the gateway is called (24) using said A-party number and/or corresponding information as call address;
an SCCP message is generated (25) in the Global Title address field of which the A-party number and/or corresponding information is set by the gateway; and
the signaling associated with the telecommunication connection to be established is directed (27) to the predetermined service control point (SCP-A) on the basis of the A-party number and/or corresponding information.

2. Method as defined in claim 1, **characterised in that** the routing label of the signaling message is determined by analyzing (26) the Global Title address field in the SCCP layer and converting (26) the Global Title address into a corresponding destination point code.

3. Method as defined in claim 1 or 2, **characterised in that**
the signaling message is generated (26) by inserting the SCCP message into the signaling information field of a message signaling unit;
the signaling message is directed (27) to a predetermined service control point (SCP-A) on the basis of the routing label; and
based on the signaling message, a connection is established (28) from the service control point (SCP-A) to the service switching point (SSP).

4. Method as defined in claims 1 - 3, **characterised in that** the load situation in the telecommunication network is managed by defining service control points corresponding to the A-parties and distributing the A-parties between predetermined service control points (SCP-A) on the basis of Global Title analyses performed in the signaling network (4).

5. System for establishing and controlling a telecommunication connection in a telecommunication network comprising a telecommunication terminal (1), a telephone exchange (2) comprising means for the processing of call setup messages, and an intelligent network (3) comprising a service switching point (SSP), a gateway (GW), a signaling network (SS7) and one or more service control points (SCP), said service switching point (SSP) being connected to said gateway (GW) and said gateway being connected to said signaling network (SS7) and said service control points (SCP) being connected to said signaling network (SS7), and in which system the establishment and control of the telecommunication connection is managed by means of the intelligent network by directing the signaling associated with the telecommunication connection to be established to a predetermined service control point (SCP-A), **characterised in that**
the service switching point (SSP) comprises means for determining the A-party number and/or corresponding information from the call setup message and means for generating an SCCP message;
the gateway (GW), which is called using said A-party number and/or corresponding information as call address, comprises means (4) for setting the A-party number and/or corresponding information into the Global Title address field of the SCCP message and means (5) for the processing of SCCP messages, wherein the signaling associated with the telecommunication connection to be established is directed to the predetermined service control point (SCP-A) on the basis of the A-party number and/or corresponding information.

6. System as defined in claim 5, **characterised in that** the gateway (GW) comprises means (6) for managing the load situation in the telecommunication network and means (7) for distributing the A-parties among predetermined service control points (SCP-A) on the basis of Global Title analyses.

## Patentansprüche

1. Verfahren zum Erstellen und zum Steuern einer Telekommunikationsverbindung in einem Telekommunikationsnetz, welches aufweist:
ein Telekommunikationsendgerät (1),
einen Telefon-Ortsanschlussbereich (2), welcher eine Einrichtung für das Verarbeiten von Anruf-Erstellungsnachrichten aufweist, und
ein intelligentes Netz (3), welches aufweist: eine Dienstevermittlungsstelle (SSP), ein Gateway (GW), ein Signalisiernetz (SS7) und einen oder mehrere Dienste-Steuerungsstellen (SCP), wobei die Dienste-Vermittlungsstelle (SSP) an das Gateway (GW) angeschlossen ist und das Gateway an das Signalisiernetz (SS7) angeschlossen ist und die Dienste-Steuerungsstellen (SCP) an das Signalisiernetz (SS7) angeschlossen sind, und
wobei in dem Verfahren das Erstellen und die Steuerung der Telekommunikationsverbindung mit Hilfe des intelligenten Netzes gesteuert wird, indem das Signalisieren, welches mit der Telekommunikationsverbindung, welche zu erstellen ist, zu einer vorher festgelegten Dienste-Steuerungsstelle (SCP-A) geführt wird, **dadurch gekennzeichnet, dass:**
die A-Teilnehmer-Nummer und/oder entsprechende Information aus der Anruf-Erstellungsnachricht bestimmt wird (22);
das Gateway unter Benutzen der A-Teilnehmer-Nummer und/oder der entsprechenden Information als Anrufadresse angerufen wird (24);
eine SCCP-Nachricht in dem Global Title- bzw. Globalem Titel-Adressfeld erzeugt wird (25), dessen A-Teilnehmer-Nummer und/oder entsprechende Information durch das Gateway eingestellt wird; und
das Signalisieren, welches zu der Telekommunikationsverbindung gehört, welche zu erstellen ist, zu dem vorher festgelegten Dienste-Steuerungspunkt (SCP-A) auf der Basis der A-Teilnehmer-Nummer und/oder entsprechenden Information geführt wird (27).

2. Verfahren nach Anspruch 1, **dadurch gekennzeichnet, dass** das Routing Label bzw. die Routing-Kennung der Signalisiernachricht durch Analysieren (26) des Globaltitel-Adressfeldes in der SCCP-Schicht und Wandeln (26) der Globaltiteladresse in einen entsprechenden Zielpunktcode bestimmt wird.

3. Verfahren nach Anspruch 1 oder 2, **dadurch gekennzeichnet, dass**
die Signalisiernachricht durch Einfügen der SCCP-Nachricht in das Signalisier-Informationsfeld einer Nachricht-Signalisiereinheit erzeugt wird (26);
die Signalisiernachricht zu einem vorher festgelegten Dienste-Steuerungspunkt (ACP-A) auf der Grundlage der Routing-Kennung geführt wird (27); und
basierend auf der Signalisiernachricht eine Verbindung von dem Dienste-Steuerungspunkt (SCP-A) zu der Dienste-Vermittlungsstelle (SSP) erstellt wird (28).

4. Verfahren nach Anspruch 1 bis 3, **dadurch gekennzeichnet, dass** die Belastungssituation in dem Telekommunikationsnetz durch Definieren von Dienste-Steuerungspunkten gesteuert wird, welche den A-Teilnehmern entsprechen und indem die A-Teilnehmer zwischen vorher festgelegten Dienste-Steuerpunkten (SCP-A) auf der Grundlage von Globaltitel-Analysen verteilt werden, welche in dem Signalisiernetz (4) durchgeführt werden.

5. System zum Erstellen und Steuern einer Telekommunikationsverbindung in einem Telekommunikationsnetz, welches aufweist: ein Telekommunikationsendgerät (1), einen Telefon-Ortsanschlussbereich (2), welcher eine Einrichtung zum Verarbeiten von Anruf-Erstellungsnachrichten aufweist, und ein intelligentes Netz (3), welches eine Dienste-Vermittlungsstelle (SSP), ein Gateway (GW), ein Signalisiernetz (SS7) und einen oder mehrere Dienste-Steuerungspunkte (SCP) aufweist, wobei die Dienste-Vermittlungsstelle (SSP) an das Gateway (GW) angeschlossen ist und das Gateway an das Signalisiernetz (SS7) angeschlossen ist und die Dienste-Steuerungspunkte (SCP) mit dem Signalisiernetz (SS7) verbunden sind, und wobei in dem System das Erstellen und das Steuern der Telekommunikationsverbindung mit Hilfe des intelligenten Netzes gesteuert wird, indem das Signalisieren, welches mit der Telekommunikationsverbindung verbunden ist, welche zu erstellen ist, zu einer vorher festgelegten Dienste-Steuerungsstelle (SCP-A) geführt wird, **dadurch gekennzeichnet, dass**
die Dienste-Vermittlungsstelle (SSP) eine Einrichtung zum Bestimmen der Teilnehmernummer und/oder entsprechender Information aus der Anruf-Erstellungsnachricht und eine Einrichtung aufweist, um eine SCCP-Nachricht zu erzeugen;
das Gateway (GW), welches angerufen wird, wobei die A-Teilnehmer-Nummer und/oder die entsprechende Information als Anrufadresse genutzt wird, eine Einrichtung (4), um die A-Teilnehmer-Nummer und/oder die entsprechende Information in das Globaltitel-Adressfeld der SCCP-Nachricht zu stellen, und eine Einrichtung (5) aufweist, um die SCCP-Nachrichten zu verarbeiten, wobei das Signalisieren, welches zu der Telekommunikationsverbindung gehört, welche zu erstellen ist, an die vorher festgelegte Dienste-Steuerstelle (SCP-A) auf der Grundlage der A-Teilnehmer-Nummer und/oder der entsprechenden Information geführt wird.

6. System nach Anspruch 5, **dadurch gekennzeichnet, dass** das Gateway (GW) aufweist: eine Einrichtung (6), um die Belastungssituation in dem Telekommunikationsnetz zu steuern, und eine Einrichtung (7), um die A-Teilnehmer unter vorher festgelegten Dienste-Steuerungsstellen (SCP-A) auf der Grundlage der Globaltitel-Analysen zu verteilen.

## Revendications

1. Procédé pour établir et commander une connexion de communication dans un réseau de télécommunication comportant :
un terminal de télécommunication (1),
un central téléphonique (2) comportant des moyens permettant de traiter des messages d'établissement d'appel, et
un réseau intelligent (3) comportant un commutateur d'accès aux services (SSP), une passerelle (GW), un réseau de signalisation (SS7) et un ou plusieurs points de commande de service-réseau (SCP), ledit commutateur d'accès aux services (SSP) étant connecté à ladite passerelle (GW) et ladite passerelle étant connectée au réseau de signalisation (SS7) et lesdits points de commande de service-réseau (SCP) étant connectés audit réseau de signalisation (SS7), et
dans lequel procédé, l'établissement et la commande de la connexion de télécommunication sont gérés au moyen du réseau intelligent en acheminant la signalisation associée à la connexion de télécommunication devant être établie vers un point de commande de service-réseau prédéterminé (SCP-A), **caractérisé en ce que :**
le numéro de la partie A et/ou les informations correspondantes sont déterminés (22) à partir du message d'établissement d'appel ;
la passerelle est appelée (24) en utilisant ledit numéro de la partie A et/ou lesdites informations correspondantes en tant qu'adresse d'appel ;
un message SCCP est généré (25) dans le champ d'adresse « titre global » pour lequel le numéro de la partie A et/ou les informations correspondantes sont définis par la passerelle ; et
la signalisation associée à la connexion de télécommunication devant être établie est acheminée (27) vers le point de commande de service-réseau prédéterminé (SCP-A) sur la base du numéro de la partie A et/ou des informations correspondantes.

2. Procédé selon la revendication 1, **caractérisé en ce que** l'étiquette de routage du message de signalisation est déterminée en analysant (26) le champ d'adresse « titre global » dans la couche SCCP et en convertissant l'adresse « titre global » en un code de point de destination correspondant.

3. Procédé selon la revendication 1 ou 2, **caractérisé en ce que**
le message de signalisation est généré (26) en insérant le message SCCP dans le champ d'informations de signalisation d'une unité de signalisation de message ;
le message de signalisation est acheminé (27) vers un point de commande de service-réseau prédéterminé (SCP-A) sur la base de l'étiquette de routage ; et
sur la base du message de signalisation, une connexion est établie (28) du point de commande de service-réseau prédéterminé (SCP-A) au commutateur d'accès aux services (SSP).

4. Procédé selon l'une quelconque des revendications 1 à 3, **caractérisé en ce que** la situation de charge dans le réseau de télécommunication est gérée en définissant des points de commande de service correspondant aux parties A et en distribuant les parties A entre des points de commande de service-réseau prédéterminés (SCP-A) sur la base d'analyses de « titre global » mises en oeuvre dans le réseau de signalisation (4).

5. Système pour établir et commander une connexion de communication dans un réseau de télécommunication comportant un terminal de télécommunication (1), un central téléphonique (2) comportant des moyens permettant de traiter des messages d'établissement d'appel, et un réseau intelligent (3) comportant un commutateur d'accès aux services (SSP), une passerelle (GW), un réseau de signalisation (SS7) et un ou plusieurs points de commande de service-réseau (SCP), ledit commutateur d'accès aux services (SSP) étant connecté à ladite passerelle (GW) et ladite passerelle étant connectée au réseau de signalisation (SS7) et lesdits points de commande de service-réseau (SCP) étant connectés audit réseau de signalisation (SS7), et dans lequel système, l'établissement et la commande de la connexion de télécommunication sont gérés au moyen du réseau intelligent en acheminant la signalisation associée à la connexion de télécommunication devant être établie vers un point de commande de service-réseau prédéterminé (SCP-A), **caractérisé en ce que**
le commutateur d'accès aux services (SSP) comporte des moyens pour déterminer le numéro de la partie A et/ou des informations correspondantes à partir du message d'établissement d'appel et des moyens permettant de générer un message SCCP ;
la passerelle (GW), qui est appelée (24) en utilisant ledit numéro de la partie A et/ou lesdites informations correspondantes en tant qu'adresse d'appel, comporte des moyens (4) pour définir le numéro de la partie A et/ou les informations correspondantes dans le champ d'adresse « titre global » du message SCCP et des moyens (5) permettant le traitement des messages SCCP, et dans lequel la signalisation associée à la connexion de télécommunication devant être établie est acheminée vers le point de commande de service-réseau prédéterminé (SCP-A) sur la base du numéro de la partie A et/ou des informations correspondantes.

6. Système selon la revendication 5, **caractérisé en ce que** la passerelle (GW) comporte des moyens (6) permettant de gérer la situation de charge dans le réseau de télécommunication et des moyens (7) permettant de distribuer les parties A entre des points de commande de service-réseau prédéterminés (SCP-A) sur la base d'analyses de « titre global ».
